# EUROPEAN PATENT APPLICATION

(11) **EP 1 585 033 A1**
(43) Date of publication of application: **12.10.2005**
(21) Application number: 04008575.5
(22) Date of filing: 08.04.2004
(51) Int. Cl.: G06F 17/30

(54) **Method and device for preparing an index of a database and for retrieving data from the database**

(71) Applicant: DEUTSCHE THOMSON-BRANDT GMBH, 78048 Villingen-Schwenningen (DE)
(72) Inventor: Janssen, Uwe, 30926 Seelze (DE); Blawat, Meinolf, 30659 Hannover (DE); Winter, Marco, 30173 Hannover (DE)
(74) Representative: Rittner, Karsten

(57) **Abstract**

The index size of a database or data collection shall be reduced. For this the terms (string 1) are not stored for example in ASCII-code but only as hash values (hash 1). Furthermore, the pointers (P1, P2, P3) for one term or hash value (hash 1) are stored in sorted order in a list of variable length integers, in which only the differences of each two successive pointers values are stored. Thus, the index size can be reduced to nearly 10% of the payload data.

## Description

The present invention relates to a method and a device for preparing an index for a database or a collection of data by extracting word strings and corresponding pointer data from said data base or collection of data. Furthermore, the present invention relates to a method and device for retrieving data from a database or a collection of data.

### Background

For fast retrieval of data in databases or other data collections the presence of at least one index is crucial. Standard indexes for "full-text" search operations, i.e. over all fields of a database or all words or values in a data collection, may reach a similar size as the payload data or user data itself.

The standard solution for indexes in data collections is the so called inverted file. In such inverted file all words or values (so called index terms) of the payload are separated and sorted. Attached to each term is a pointer - the information of the term's position in the payload. The storage of this inverted file has to be done in a way that enables a fast retrieval of the term and the pointer to its position in the payload data. Possible storing methods include the use of hash tables, B-trees, or binary search. Independent of the storage method each term-pointer pair has to be stored. Standard storage savings are achieved by storing all identical terms only once and attaching a list of pointers to these terms. Further savings can be achieved by reducing the information of the pointers to only the document reference and omitting the position within the document. This also results in the storage of only one pointer per term and document.

Nevertheless at least all terms have to be stored uniquely and their pointers have to be stored uniquely per document.

### Invention

In view of that it is the object of the present invention to provide a method and a device which enable a higher degree of storage saving when storing an index of a data base or a collection of data.

According to the present invention this object is solved by a method for preparing an index for a database or a collection of data by extracting word strings and corresponding pointer data from said data base or collection of data, assigning hash values to said word strings and storing only said hash values together with said pointer data as index list.

Additionally there is provided a method for retrieving data from a database or a collection of data by assigning a search string to a search hash value providing an index list including hash values, each of them being assigned to one or more pointer data, retrieving pointer data from said index list, which correspond to said search hash value and retrieving data from said database or collection of data by using said retrieved pointer data from said index list.

Furthermore, according to the present invention there is provided a device for preparing an index for a database or a collection of data including extracting means for extracting word strings and corresponding pointer data from said data base or collection of data assigning means for assigning hash values to said word strings and storing means for storing only said hash values together with said pointer data as index list.

There is also provided a device for retrieving data from a database or a collection of data including assigning means for assigning a search string to a search hash value, storing means for providing an index list constituted of hash values, each of them being assigned to one or more pointer data, and retrieving means for retrieving pointer data from said index list, which correspond to said search hash value, and for retrieving data from said data base or collection of data by using said retrieved pointer data from said index list.

When storing hash values instead of terms, i.e. word strings, the amount of storage space can be reduced to 32 bit per unique term, for example. Thus, the storage space of a 8 character word represented in ASCII-code can be reduced from 8x8 bits to 4x8 bits.

Moreover, in order to solve the above-mentioned object there is provided a method for preparing an index for a database or a collection of data by extracting a plurality of pointer data corresponding to one word string or one hash value coding said one word string from said data base or collection of data, sorting said pointer data of said one word string or said one hash value in an ascending or descending order and storing a difference of values of two successive pointer data of said sorted pointer data with variable length integers together with said one word string or said one hash value as index data.

There is also provided a method for retrieving data from a data base or a collection of data by providing a search word string or search hash value providing an index list including a word string or a hash value being respectively assigned to a plurality of pointer data, wherein the first of said plurality of pointer data is an absolute value and the other pointer data each represent a difference value of two pointer data and wherein said pointer data are provided as variable length integers, determining search pointer data corresponding to said search word string or search hash value with the help of said index list, wherein said search pointer data is a difference value, determining an absolute value for said search pointer data by adding said difference value to said absolute value of said first pointer data and retrieving data from said database or collection of data by using said determined absolute value as pointer data.

Furthermore, there is provided a device for preparing an index for a database or a collection of data including extracting means for extracting a plurality of pointer data corresponding to one word string or one hash value coding said one word string from said data base or collection of data, sorting means for sorting said pointer data of said one word string or said one hash value in an ascending or descending order and storing means for storing a difference of values of two successive pointer data of said sorted pointer data with variable length integers together with said one word string or said one hash value as index data.

Finally, there is provided a device for retrieving data from a data base or a collection of data by storing means for providing an index list including a word string or a hash value being respectively assigned to a plurality of pointer data, wherein the first of said plurality of pointer data is an absolute value and the other pointer data each represent a difference value of two pointer data and wherein said pointer data are provided as variable length integers, determining means for determining search pointer data corresponding to a search word string or search hash value with the help of said index list, wherein said search pointer data is a difference value, retrieving means for determining an absolute value for said search pointer data by adding said difference value to said absolute value of said first pointer data, and for retrieving data from said database or collection of data by using said determined absolute value as pointer data.

The storage of pointers in sorted order in a list of variable length integers, in which only the differences of each two successive pointer values are stored, leads to a further reduction of storage space. The reason for this is, that the differences between pointer values are typically very small, so that storage space can be saved when only storing the small differences with variable length integers.

Preferably, both inventive concepts, namely storing hash codes instead of complete terms and storing the differences of pointers with variable length integers are combined for preparing an index list. This typically results in an index size of nearly 10% of the payload data for data collections with textual payload like standard text or XML documents.

Furthermore, advantages can be obtained if the difference of values of pointer data is stored as multi-nibble-integer. Thus, the small differences of the pointer values can be stored more efficiently.

The most significant bit of each nibble may be a continuation flag. Thus, an arbitrary number of nibbles in series can be created.

The nibble 0x8, i.e. the hexadecimal value 8 also indicated as 8₁₆, may be used as escape sequence. With this escape sequence it is possible to use the following nibbles for specific functions.

### Drawings

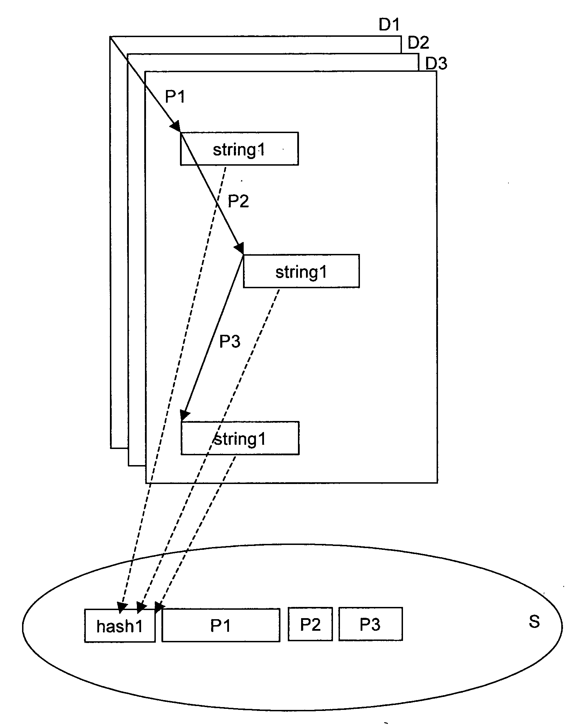

An exemplary embodiment of the invention is illustrated in the drawing and is explained in more detail in the following description. The drawing shows a sketch for preparing an index of a database according to the present invention.

### Exemplary embodiments

A collection of data may include a plurality of documents D1, D2 and D3 as shown in the Figure. An index list shall be created for this data collection. On document D3 string 1 is present in three positions. The first position is indicated by the pointer P1, wherein the origin of pointer P1 is the absolute zero address. This means that pointer P1 is an absolute pointer. The second position of string 1 is indicated by pointer P2. The origin of pointer P2 is equal to the first position indicated by pointer P1. Thus, pointer P2 is a relative pointer and represents the difference between the second position and the first position of string 1. Similarly, pointer P3 is a relative pointer indicating the third position of string 1 on the basis of the second position of string 1.

When storing a registration of string 1 on a storage medium S, string 1 is replaced by its hash code hash 1. This hash code needs less storage space than the ASCII string 1. Together with the hash code of string 1 the three pointers P1, P2 and P3 have to be stored. P1 has a large size since it is an absolute pointer. In contrast to that pointers P2 and P3 are relative pointers and, therefore, smaller in size, if they are stored as variable length integers.

Now the encoding method will be described on the basis of the following example:

Within a fictive collection of documents the word "automatic" having 9 characters occurs in 11 documents of a text collection. The references to the documents (pointers) may have the values as shown in the first column of table 1.

For the corresponding "index line" (not shown in table 1) - i.e. the term (the string "automatic") together with its pointers (document references) - the saving of storage space will be achieved by two means:
a) The term (the string "automatic") will be replaced with a 32-bit hash value of itself (0x63c2322b). The corresponding transformation is indicated by dashed arrows in the Figure.
   This transformation saves 5 bytes, if the string is coded with 8-bit characters, or even more, if it is coded with Unicode, since the string "automatic" needs 9 bytes and it is transformed to a 4-byte (or equivalent) hash value.
b) The pointers to the 11 documents normally are 32-bit values and therewith would occupy 44 bytes. According to a preferred embodiment of this invention pointers are sorted in ascending order according to their value and for each pointer the difference to its predecessor is stored. Due to the sorting step the differences are positive and in many cases very small. Therewith they are well suitable to be coded as variable length integers.

Table 1 shows in the second column the hexadecimal differences to the respective hexadecimal predecessor pointer. These differences are shown in the third column in binary format. Below each difference a respective code based on the binary format is indicated. The encoding of the pointer differences with an encoding format that is similar to the multi-byte integer coding format specified in the WAP-WBXML standard (WAP-192-WBXML-20010725-a). However, instead of bytes (8 bit) nibbles (4 bit) are used for encoding.

A multi-nibble integer (MNI) representing one difference value consists of a series of nibbles, where the most significant bit is the continuation flag and the remaining three bits are a scalar value (compare third column of the table). The continuation flag "1" indicates that a nibble is not the end of the multi-nibble sequence. A single integer value is encoded into a sequence of N nibbles. The first N-1 nibbles have the continuation flag set to "1". The final nibble in the series has a continuation flag set to "0".

The nibble 0x8 (=1000b) at the beginning of a MNI makes no sense as the scalar part of the nibble is zero and will normally be omitted. Due to this it can be used as an escape value to introduce values with special meaning, e.g. 0x80 in front of a hash value indicates that it is not MNI encoded but left as a fixed 32-bit value.

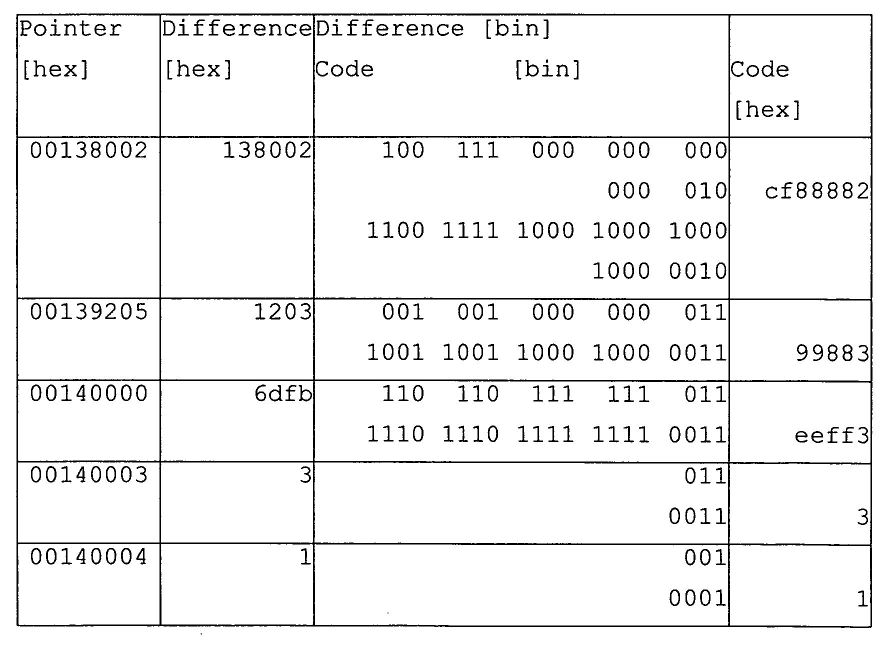

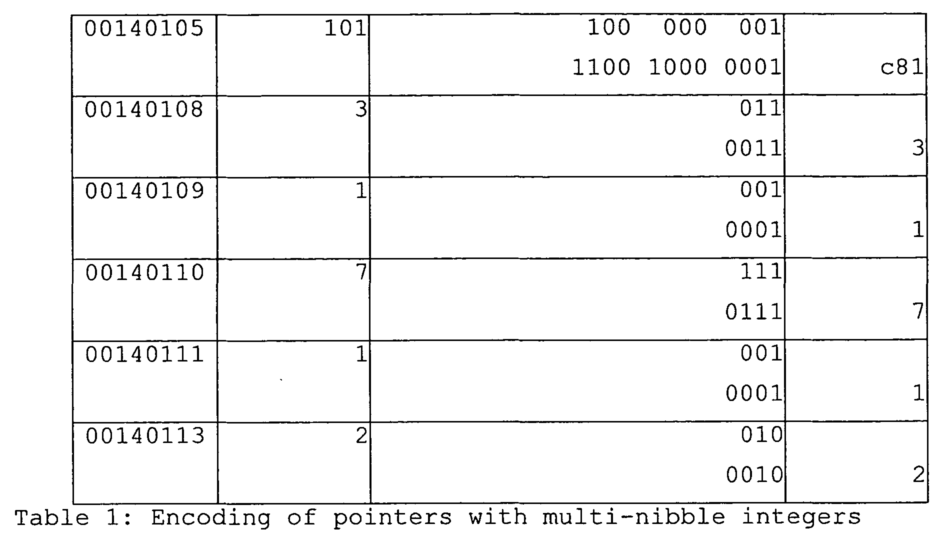

The right column of the table shows the code of the third column in hexadecimal format. The encoded list of pointers in the example for the word "automatic" in 11 documents occupies only 13.5 bytes (= 27 hexadecimal numbers) in opposite to 44 bytes for the raw list.

Together with at least 5 saved bytes for the term (4 bytes hash code instead of 9 bytes of the ASCII-string) the compression ratio for this example index line is 1- (13,5 + 4) bytes / (44+9) bytes = 67 %. Other examples with lot of textual data show compressions ratios of more than 90 %.

The inventive concept of storing an index list by storing only hash values of terms (word strings) and not the complete terms and by storing the pointers in sorted order in a list of variable length integers, in which only the differences of each two successive pointer values are stored, has the following advantages:
- A significant compression ratio of inverted file indexes can be achieved. Thereby, the compression ratio depends on the variety and length of terms (language, vocabulary, etc. ).
- Simple encoding and decoding algorithms can be used for storing the index list. Although some terms may lead to the same hash value (ambiguity of the hash values) and the payload referenced by the pointers found via an index look up has to be loaded and checked for the correct term. In real tests with textual data this ambiguity was found to be lower than 0,1% of all terms.
- The used code can be independent of encoded values for both terms and pointers.
- A simple encoding of escape sequences is possible. The first 8 escape codes only occupy 1 byte. Furthermore, the number of escape codes is not limited.

## Claims

1. Method for preparing an index for a database or a collection of data by
- extracting word strings (string 1) and corresponding pointer data (P1, P2, P3) from said data base or collection of data,
**characterized by**
- assigning hash values (hash 1) to said word strings (string 1) and
- storing only said hash values (hash 1) together with said pointer data (P1, P2, P3) as index list.

2. Method for retrieving data from a database or a collection of data
**characterized by**
- assigning a search hash value to a search string,
- providing an index list including hash values, each of them being assigned to one or more pointer data,
- retrieving pointer data from said index list, which correspond to said search hash value and
- retrieving data from said database or collection of data by using said retrieved pointer data from said index list.

3. Device for preparing an index for a database or a collection of data including
- extracting means for extracting word strings (string 1) and corresponding pointer data (P1, P2, P3) from said data base or collection of data,
**characterized by**
- assigning means for assigning hash values (hash 1) to said word strings (string 1) and
- storing means for storing only said hash values (hash 1) together with said pointer data (P1, P2, P3) as index list.

4. Device for retrieving data from a database or a collection of data
**characterized by**
- assigning means for assigning a search string to a search hash value,
- storing means for providing an index list constituted of hash values, each of them being assigned to one or more pointer data and
- retrieving means for retrieving pointer data from said index list, which correspond to said search hash value, and for retrieving data from said data base or collection of data by using said retrieved pointer data from said index list.

5. Method according to claim 1 or 2 or device according to claim 3 or 4, wherein plural pointer data commonly assigned to one hash value (hash 1) are stored in a sorted order by using variable length integers each representing a difference of values of two successive pointer data.

6. Method or device according to claim 5, wherein said difference of values is stored as multi-nibble-integer.

7. Method or device according to claim 6, wherein the most significant bit of each nibble is a continuation flag.

8. Method or device according to claim 6 or 7, wherein the nibble 0x8 is used as escape sequence.

9. Method for preparing an index for a database or a collection of data by
- extracting a plurality of pointer data (P1, P2, P3) corresponding to one word string (string 1) or one hash value coding said one word string from said data base or collection of data,
**characterized by**
- sorting said pointer data (P1, P2, P3) of said one word string (string 1) or said one hash value in an ascending or descending order and
- storing a difference of values of two successive pointer data of said sorted pointer data with variable length integers together with said one word string or said one hash value (hash 1) as index data.

10. Method for retrieving data from a data base or a collection of data by
- providing a search word string or search hash value,
- providing an index list including a word string or a hash value being respectively assigned to a plurality of pointer data, wherein the first of said plurality of pointer data is an absolute value and the other pointer data each represent a difference value of two pointer data and wherein said pointer data are provided as variable length integers,
- determining search pointer data corresponding to said search word string or search hash value with the help of said index list, wherein said search pointer data is a difference value,
- determining an absolute value for said search pointer data by adding said difference value to said absolute value of said first pointer data and
- retrieving data from said database or collection of data by using said determined absolute value as pointer data.

11. Device for preparing an index for a database or a collection of data including
- extracting means for extracting a plurality of pointer data (P1, P2, P3) corresponding to one word string or one hash value coding said one word string (string 1) from said data base or collection of data,
**characterized by**
- sorting means for sorting said pointer data (P1, P2, P3) of said one word string or said one hash value in an ascending or descending order and
- storing means for storing a difference of values of two successive pointer data of said sorted pointer data with variable length integers together with said one word string or said one hash value as index data.

12. Device for retrieving data from a data base or a collection of data by
- storing means for providing an index list including a word string or a hash value being respectively assigned to a plurality of pointer data, wherein the first of said plurality of pointer data is an absolute value and the other pointer data each represent a difference value of two pointer data and wherein said pointer data are provided as variable length integers,
- determining means for determining search pointer data corresponding to a search word string or search hash value with the help of said index list, wherein said search pointer data is a difference value,
- retrieving means for determining an absolute value for said search pointer data by adding said difference value to said absolute value of said first pointer data, and for retrieving data from said database or collection of data by using said determined absolute value as pointer data.

13. Method according to claim 9 or 10 or device according to claim 11 or 12, wherein said difference of values is stored as multi-nibble-integer.

14. Method or device according to claim 13, wherein the most significant bit of each nibble is a continuation flag.

15. Method or device according to claim 13 or 14, wherein the nibble 0x8 is used as escape sequence.

16. Computer program product implementing a method according to one of the claims 1, 2, 5 to 10 and 13 to 15.
